# EUROPÄISCHE PATENTSCHRIFT

(11) **EP 3 084 926 B1**
(45) Veröffentlichungstag und Bekanntmachung des Hinweises auf die Patenterteilung: **31.03.2021**
(21) Anmeldenummer: 15709437.6
(22) Anmeldetag: 27.02.2015
(51) Int. Cl.: H02K 5/20, H02K 1/30, H02K 1/32, H02K 7/00, B63H 1/00

(54) **ROTOR EINER ROTIERENDEN ELEKTRISCHEN MASCHINE**
ROTOR OF A ROTATING ELECTRIC MACHINE
ROTOR DE MACHINE ÉLECTRIQUE TOURNANTE

(30) Priorität: 17.03.2014 EP 14160250
(43) Veröffentlichungstag der Anmeldung: 26.10.2016
(73) Patentinhaber: Siemens Energy Global GmbH & Co. KG, 81739 München (DE)
(72) Erfinder: BALZER, Christoph, 12163 Berlin (DE); BALKE, Benjamin, 10589 Berlin (DE); SEIBICKE, Frank, 14822 Borkheide (DE)
(86) Internationale Anmeldenummer: PCT/EP2015/054167
(87) Internationale Veröffentlichungsnummer: WO 2015/139933

(56) Entgegenhaltungen:
- EP-A2- 0 414 129
- WO-A1-2012/121643
- WO-A2-2011/051228
- WO-A2-2013/093856
- DE-A1- 10 143 713
- DE-A1-102008 050 848
- GB-A- 2 165 919

## Beschreibung

Die Erfindung betrifft einen Rotor einer rotierenden elektrischen Maschine.

Rotoren rotierender elektrischer Maschinen weisen Rotorblechpakete auf, die sich im Betrieb der Rotoren erwärmen und aus denen daher Wärme abgeführt werden muss. Die im Rotorblechpaket entstehende Wärme wird in der Regel über radiale Kühlschlitze im Rotorblechpaket abgeführt, manchmal auch über im Rotorblechpaket eingebrachte axial verlaufende Kühlkanäle.

CH 635 711 A5 offenbart einen Rotor eines vertikalen Wasserkraftgenerators, der eine Welle und einen Rotorkörper mit befestigten Keilleisten enthält. Die Keilleisten sind in ihrem Unterteil mit einer horizontalen Quernut versehen, mit der eine in dieser untergebrachten Stützeinrichtung gehalten ist, auf die sich ein Rotorkranz mit Polen abstützt.

EP 1 885 046 A1 offenbart eine rotierende elektrische Maschine mit einem ringförmigen Ständerkern und einem Motorrotor, der einen Rotorflansch aufweist. Der Rotorflansch fixiert und unterstützt ein Rotorjoch des Rotors an seiner äußeren Umfangsfläche.

GB 2 165 919 A offenbart eine Antriebsvorrichtung, insbesondere für einen Strahlruderantrieb, mit einer vertikalen Abtriebswelle.

US 2004/0189140 A1 offenbart einen Elektromotor für ein Hybridfahrzeug mit einem Rotor, der zwischen einem Verbrennungsmotor und einem Getriebe angeordnet ist.

WO 2013/093856 A2 offenbart eine Windturbine zur Erzeugung elektrischer Energie mit zwei elektrischen Maschinen, deren Rotoren durch eine Getriebeanordnung miteinander verbunden sind.

EP 0 414 129 A2 offenbart eine elektrische Rotationsmaschine des Vertikalwellentyps, deren Rotationswelle im Wesentlichen vertikal ist, mit einer derart gesteigerten mechanischen Festigkeit, dass sie für eine große Konstruktion bzw. Struktur der Maschine mit hoher Drehgeschwindigkeit geeignet ist.

WO 2011/051228 A2 offenbart einen Windkraftgenerator mit einem Läufer mit Permanentmagneten. Die Permanentmagnete sind auf einem als Hohlwelle ausgebildeten Polradmantel angeordnet, wobei der Polradmantel über Tragelemente an seinen Stirnseiten mit einer Welle oder Wellenstummeln drehfest verbunden ist. Die Hohlwelle weist in ihrem Inneren zumindest ein Rohr auf, dessen Mantelfläche in äquidistantem Abstand zum Polradmantel verläuft.

DE 10 2008 050 848 A1 offenbart einen Ringgenerator einer Windenergieanlage mit einem Stator, der einen umlaufenden Statorring zum Aufnehmen von Statorwicklungen aufweist, und einem relativ zum Stator drehbar um eine Drehachse gelagerten Läufer. Der Statorring weist Kühlkanäle zum Kühlen des Stators durch einen Luftstrom auf.

WO 2012/121643 A1 offenbart eine elektrische rotierende Maschine mit einem Stator und einem Rotor, wobei Magnete auf einer Rotoroberfläche angebracht sind, die dem Stator über einen Spalt gegenüberstehen. Die Magnete werden durch ein Kühlfluid gekühlt, welches durch Kanäle im Rotor verläuft.

Der Erfindung liegt die Aufgabe zugrunde, einen verbesserten Rotor einer rotierenden elektrischen Maschine anzugeben.

Die Aufgabe wird erfindungsgemäß durch die Merkmale des Anspruchs 1 gelöst.

Vorteilhafte Ausgestaltungen der Erfindung sind Gegenstand der Unteransprüche.

Ein erfindungsgemäßer Rotor einer rotierenden elektrischen Maschine umfasst eine zweiteilige Rotorwelle, die aus zwei entlang einer Rotorachse hintereinander angeordneten und miteinander verbundenen Rotorwellenteilen besteht, ein ringförmiges Rotorblechpaket, das um einen Abschnitt eines ersten Rotorwellenteils herum angeordnet ist, und mehrere Wellenstege, die den ersten Rotorwellenteil mit dem Rotorblechpaket verbinden.

Die mehrteilige Ausführung der Rotorwelle verbessert gegenüber einer einteiligen Ausführung die Biegefestigkeit der Rotorwelle und ermöglicht überdies die Installation eines Drehmomentenmesssystems in einem Verbindungsbereich zweier Rotorwellenteile. Die zweiteilige Ausführung minimiert gegenüber einer Ausführung mit mehr als zwei Rotorwellenteilen vorteilhaft den Herstellungsaufwand und den zum Verbinden der Rotorwellenteile erforderlichen Montageaufwand, wodurch signifikante Kostenvorteile ermöglicht werden. Die Verbindung des Rotorblechpaketes mit der Rotorwelle über Wellenstege ist gegenüber bekannten Rotorausführungen, bei denen das Rotorblechpaket direkt an einem als Hohlwelle ausgebildeten Rotorwellenabschnitt angeordnet wird, kostengünstiger und ermöglicht dabei ebenso gute Biegesteifigkeitseigenschaften wie diese Rotorausführungen.

Eine Ausgestaltung der Erfindung sieht eine Flanschverbindung zur Verbindung der beiden Rotorwellenteile vor.

Eine Flanschverbindung ermöglicht vorteilhaft eine einfache und zuverlässige Verbindung der Rotorwellenteile.

Dabei weist der erste Rotorwellenteil vorzugsweise einen mit den Wellenstegen verbundenen Flansch der Flanschverbindung auf.

Die Verbindung der Wellenstege mit dem Flansch verbessert vorteilhaft die Steifigkeit und Stabilität des Rotors, da am Steggrund eines Wellensteges abtriebsseitig die größten Tangentialspannungen auftreten.

Ferner ist zwischen den Flanschen der Flanschverbindung vorzugsweise ein Drehmomentenmesssystem zur Erfassung eines von dem Rotor erzeugten Drehmoments angeordnet.

Dadurch wird die Flanschverbindung vorteilhaft zur Installation eines Drehmomentenmesssystems genutzt.

Eine weitere Ausgestaltung der Erfindung sieht hohlzylindersegmentförmig ausgebildete Kanalbleche vor, die jeweils zwischen zwei Wellenstegen angeordnet und an diesen Wellenstegen befestigt sind. Derart ausgebildete und angeordnete Kanalbleche erhöhen vorteilhaft weiter die Biegesteifigkeit der Rotorwellenausführung. Insbesondere können die Kanalbleche derart ausgeführt werden, dass sie eine trommelförmige Kanalblechanordnung um den ersten Rotorwellenteil herum bilden, die die Biegesteifigkeit analog zu einer Hohlwellenausführung verbessert.

Dabei ist jedes Kanalblech vorzugsweise von einer Innenoberfläche des Rotorblechpaketes beabstandet und bildet mit der Innenoberfläche des Rotorblechpaketes einen parallel zu der Rotorachse verlaufenden ersten Kühlkanal.

Dadurch werden vorteilhaft axial verlaufende erste Kühlkanäle gebildet, die die Kühlung des Rotors verbessern.

Eine weitere Ausgestaltung der Erfindung sieht vor, dass die Innenoberfläche des Rotorblechpaketes parallel zu der Rotorachse verlaufende Kühlrippen aufweist.

Dadurch wird die Innenoberfläche des Rotorblechpaketes vergrößert und damit die Kühlfähigkeit der Innenoberfläche des Rotorblechpaketes vorteilhaft verbessert.

Eine weitere Ausgestaltung der Erfindung sieht wenigstens einen parallel zu der Rotorachse durch das Rotorblechpaket verlaufenden zweiten Kühlkanal vor.

Damit wird die Kühlung des Rotorblechpaketes weiter verbessert. Axial verlaufende Kühlkanäle ermöglichen außerdem vorteilhaft eine Verkürzung des Rotorblechpaketes gegenüber Ausführungen mit radial im Rotorblechpaket angeordneten Kühlschlitzen.

Die Erfindung sieht ferner die Verwendung eines erfindungsgemäßen Rotors insbesondere als Rotor einer rotierenden elektrischen Maschine einer Propellergondel, die auch als Pod-Antrieb bezeichnet wird, vor.

Diese Verwendung erfindungsgemäßer Rotoren ist insbesondere für Propellergondeln von Wasserfahrzeugen vorteilhaft, bei denen die Propellergondeln direkt im Wasser liegen, da dafür schlank ausgebildete Rotoren strömungstechnisch besonders bevorzugt sind und die Erfindung aufgrund der Axialbelüftung der Rotoren die Konstruktion längerer und damit bei gleicher Leistung schmalerer Rotoren ermöglicht. Dabei wird vorteilhaft ausgenutzt, dass die axiale Länge einer Propellergondel im Unterschied zu ihrem Durchmesser den hydrodynamischen Wirkungsgrad nicht beeinträchtigt.

Ferner ermöglicht die zweiteilige Ausführung erfindungsgemäßer Rotoren, wie bereits oben ausgeführt wurde, die Installation eines Drehmomentenmesssystems (und optional weiterer Sensoren) in einem Verbindungsbereich der Rotorwellenteile, die insbesondere für Pod-Antriebe vorteilhaft ist, da für diese Antriebe heute verstärkt eine Zustandsüberwachung durch Integration so genannter Condition Monitoring-Systeme gefordert wird.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Dabei zeigen:
- FIG 1: ein erstes Ausführungsbeispiel eines Rotors einer rotierenden elektrischen Maschine in einer Querschnittdarstellung,
- FIG 2: das erste Ausführungsbeispiel eines Rotors einer rotierenden elektrischen Maschine in einer Längsschnittdarstellung,
- FIG 3: ein zweites Ausführungsbeispiel eines Rotors einer rotierenden elektrischen Maschine in einer perspektivischen Längsschnittdarstellung,
- FIG 4: das zweite Ausführungsbeispiel eines Rotors einer rotierenden elektrischen Maschine in einer ersten Seitenansicht, und
- FIG 5: das zweite Ausführungsbeispiel eines Rotors einer rotierenden elektrischen Maschine in einer zweiten Seitenansicht.

Einander entsprechende Teile sind in allen Figuren mit den gleichen Bezugszeichen versehen.

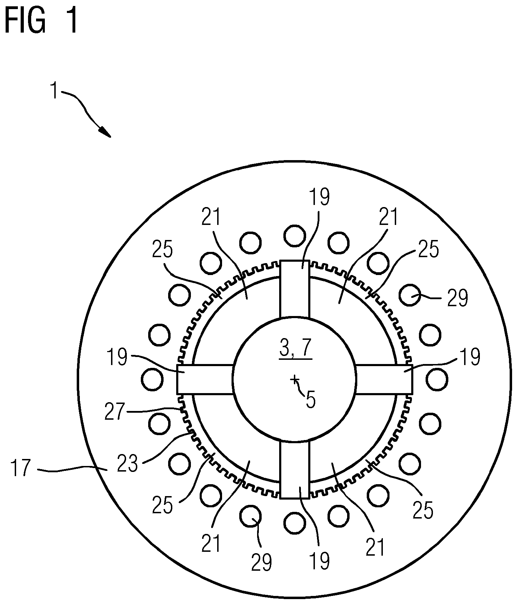

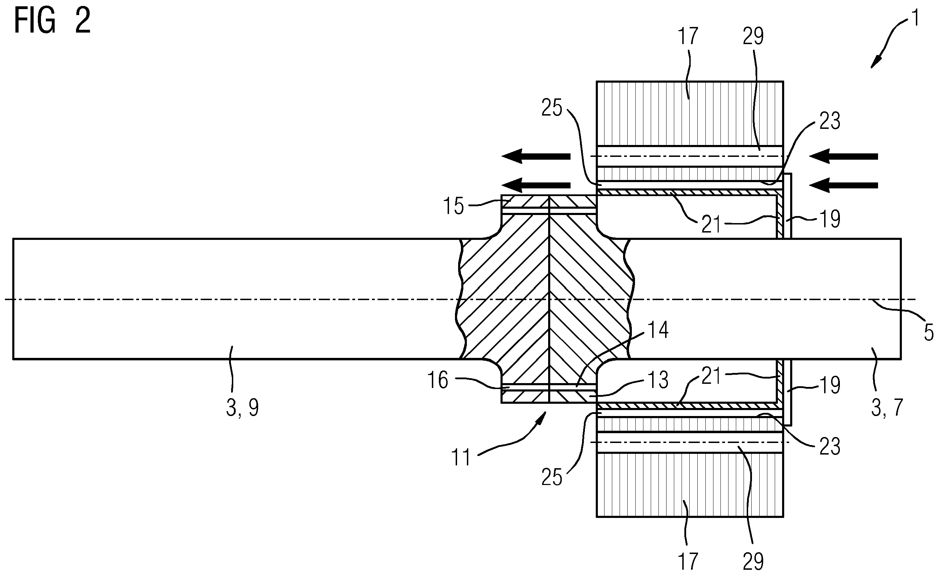

Die Figuren 1 und 2 zeigen ein erstes Ausführungsbeispiel eines Rotors 1 einer rotierenden elektrischen Maschine. Dabei zeigt Figur 1 eine Querschnittdarstellung des Rotors 1 und Figur 2 zeigt eine Längsschnittdarstellung des Rotors 1.

Der Rotor 1 umfasst eine zweiteilige Rotorwelle 3, die aus zwei entlang einer Rotorachse 5 hintereinander angeordneten Rotorwellenteilen 7, 9 besteht. Die Rotorwellenteile 7, 9 sind mittels einer Flanschverbindung 11 miteinander verbunden, die einen ersten Flansch 13 eines ersten Rotorwellenteils 7 und einen zweiten Flansch 15 des zweiten Rotorwellenteils 9 umfasst. Die Rotorachse 5 definiert eine zu ihr parallele axiale Richtung.

Der erste Flansch 13 weist erste Verbindungsbohrungen 14 auf und der zweite Flansch weist dazu korrespondierende zweite Verbindungsbohrungen 16 auf, durch die Verbindungselemente, beispielsweise Verbindungsschrauben, zur Verbindung der Flansche 13, 15 geführt werden.

Ferner umfasst der Rotor 1 ein ringförmiges Rotorblechpaket 17, das um einen Abschnitt des ersten Rotorwellenteils 7 herum angeordnet ist und mit dem ersten Rotorwellenteil 7 durch vier Wellenstege 19 verbunden ist. Dabei verlaufen die Wellenstege 19 sternförmig und bezüglich der Rotorachse 5 radial von dem ersten Rotorwellenteil 7 zu dem Rotorblechpaket 17 und sind an einem axialen Ende jeweils mit dem ersten Flansch 13 verbunden.

Des Weiteren umfasst der Rotor 1 hohlzylindersegmentförmig ausgebildete Kanalbleche 21, die jeweils zwischen zwei Wellenstegen 19 angeordnet und an diesen Wellenstegen 19 befestigt, beispielsweise angeschweißt, sind und von einer Innenoberfläche 23 des Rotorblechpaketes 17 durch einen parallel zu der Rotorachse 5 verlaufenden ersten Kühlkanal 25 getrennt sind. Dabei schließen die rotorblechpaketseitigen Oberflächen der ersten Kanalbleche 21 mit den von der Rotorachse 5 abgewandten Oberflächen der Flansche 13, 15 ab. Die hohlzylindersegmentförmige Ausbildung der Kanalbleche 21 und deren Anordnung zwischen den Wellenstegen 19 resultiert in einer trommelförmigen Kanalblechanordnung um den ersten Rotorwellenteil 7 herum, die die Biegesteifigkeit der Rotorwellenausführung analog zu einer Hohlwellenausführung verbessert.

Die Innenoberfläche 23 des Rotorblechpaketes 17 weist parallel zu der Rotorachse 5 verlaufende Kühlrippen 27 auf. Durch das Rotorblechpaket 17 verlaufen parallel zu der Rotorachse 5 zweite Kühlkanäle 29.

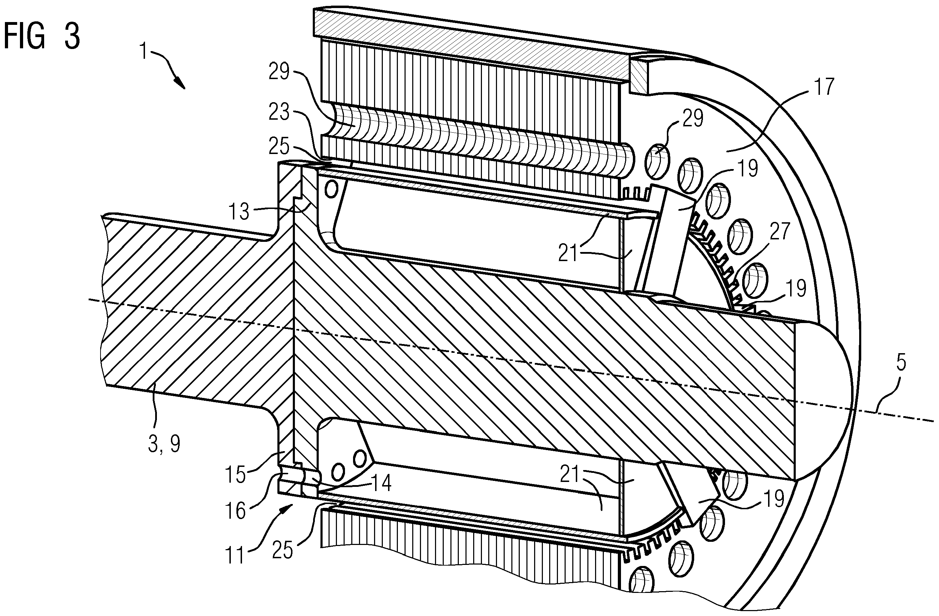

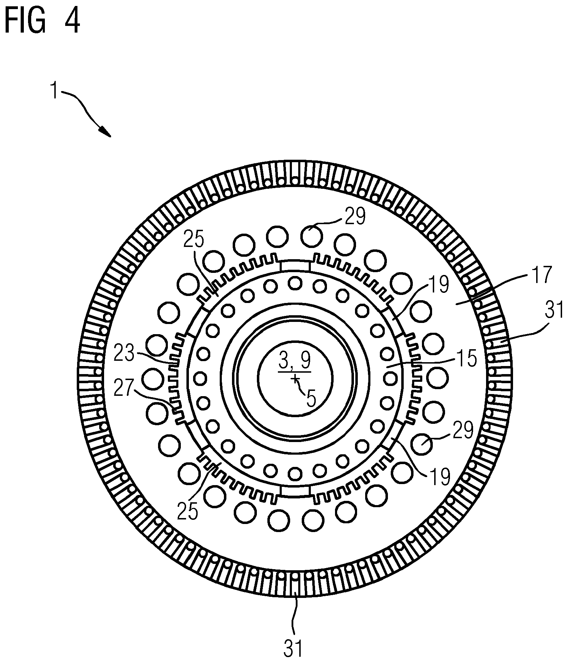

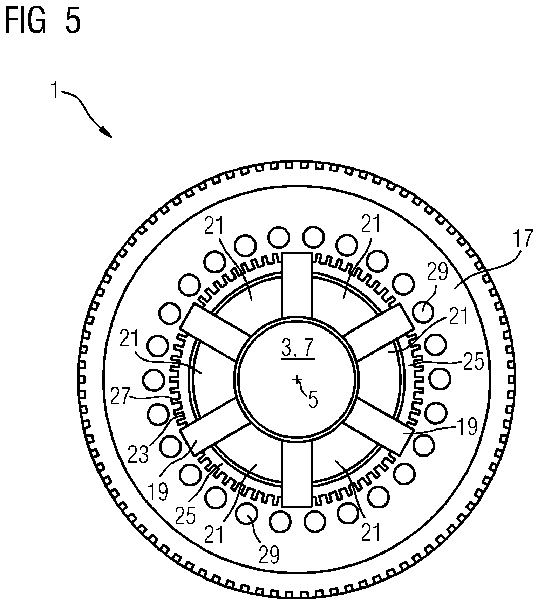

Die Figuren 3 bis 5 zeigen ein zweites Ausführungsbeispiel eines Rotors 1 einer rotierenden elektrischen Maschine. Dieses Ausführungsbeispiel unterscheidet sich von dem in den Figuren 1 und 2 dargestellten ersten Ausführungsbeispiel im Wesentlichen lediglich dadurch, dass es sechs Wellenstege 19 und entsprechend sechs zwischen den Wellenstegen 19 angeordnete Kanalbleche 21 aufweist. Figur 3 zeigt eine perspektivische Längsschnittdarstellung des Rotors 1 dieses Ausführungsbeispiels. Die Figuren 4 und 5 zeigen zwei verschiedene Seitenansichten des Rotors 1, wobei Figur 4 eine Seitenansicht auf den zweiten Rotorwellenteil 9 zeigt und Figur 5 eine Seitenansicht auf den ersten Rotorwellenteil 7 zeigt. Figur 4 zeigt auch Kurzschlussrotorstäbe 31, die am Umfang des Rotorblechpaketes 17 angeordnet sind.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen. Beispielsweise kann ein erfindungsgemäßer Rotor eine von vier und sechs verschiedene Anzahl von Wellenstegen 19 und Kanalblechen 21 aufweisen, die Innenoberfläche 23 des Rotorblechpaketes 17 kann glatt (ohne Kühlrippen 27) ausgebildet sein und/oder das Rotorblechpaket 17 kann ohne zweite Kühlkanäle 29 ausgebildet sein.

## Patentansprüche

1. Rotor (1) einer rotierenden elektrischen Maschine, umfassend
- eine zweiteilige Rotorwelle (3), die aus zwei entlang einer Rotorachse (5) hintereinander angeordneten und miteinander verbundenen Rotorwellenteilen (7, 9) besteht,
- ein ringförmiges Rotorblechpaket (17), das um einen Abschnitt eines ersten Rotorwellenteils (7) herum angeordnet ist,
- mehrere Wellenstege (19), die den ersten Rotorwellenteil (7) mit dem Rotorblechpaket (17) verbinden,
- und hohlzylindersegmentförmig ausgebildete Kanalbleche (21), die jeweils zwischen zwei Wellenstegen (19) angeordnet und an diesen Wellenstegen (19) befestigt sind, aufweisend eine Flanschverbindung (11) zur Verbindung der beiden Rotorwellenteile (7, 9),
wobei die Flanschverbindung (11) einen ersten Flansch (13) des ersten Rotorwellenteils (7) und einen zweiten Flansch (15) eines zweiten Rotorwellenteils (9) umfasst, **dadurch gekennzeichnet, dass** die Wellenstege (19) an einem axialen Ende jeweils mit dem ersten Flansch (13) der Flanschverbindung (11) verbunden sind.

2. Rotor (1) nach Anspruch 1,
**gekennzeichnet durch** ein zwischen den Flanschen (13, 15) der Flanschverbindung (11) angeordnetes Drehmomentenmesssystem zur Erfassung eines von dem Rotor (1) erzeugten Drehmoments.

3. Rotor (1) nach einem der vorhergehenden Ansprüche, **dadurch gekennzeichnet, dass** jedes Kanalblech (21) von einer Innenoberfläche (23) des Rotorblechpaketes (17) beabstandet ist und mit der Innenoberfläche (23) des Rotorblechpaketes (17) einen parallel zu der Rotorachse (5) verlaufenden ersten Kühlkanal (25) bildet.

4. Rotor (1) nach einem der vorhergehenden Ansprüche, **dadurch gekennzeichnet, dass** eine Innenoberfläche (23) des Rotorblechpaketes (17) parallel zu der Rotorachse (5) verlaufende Kühlrippen (27) aufweist.

5. Rotor (1) nach einem der vorhergehenden Ansprüche, **gekennzeichnet durch** wenigstens einen parallel zu der Rotorachse (5) durch das Rotorblechpaket (17) verlaufenden zweiten Kühlkanal (29).

6. Propellergondel mit einer rotierenden elektrischen Maschine, die einen Rotor (1) gemäß einem der vorhergehenden Ansprüche aufweist.

## Claims

1. Rotor (1) of a rotating electric machine, comprising
- a two-part rotor shaft (3) which is composed of two rotor shaft parts (7, 9) which are arranged in series along a rotor axis (5) and which are connected to one another,
- a ring-shaped rotor laminated core (17) which is arranged around a section of a first rotor shaft part (7),
- multiple shaft webs (19) which connect the first rotor shaft part (7) to the rotor laminated core (17),
- and channel laminations (21) which are of hollow cylindrical segment shape and which are arranged in each case between two shaft webs (19) and are fastened to said shaft webs (19),
having a flange connection (11) for connecting the two rotor shaft parts (7, 9),
wherein the flange connection (11) comprises a first flange (13) of the first rotor shaft part (7) and a second flange (15) of a second rotor shaft part (9),
**characterized in that** the shaft webs (19) are connected at an axial end in each case to the first flange (13) of the flange connection (11).

2. Rotor (1) according to Claim 1,
**characterized by** a torque measuring system which is arranged between the flanges (13, 15) of the flange connection (11) and which serves for detecting a torque generated by the rotor (1).

3. Rotor (1) according to either of the preceding claims,
**characterized in that** each channel lamination (21) is spaced apart from an inner surface (23) of the rotor laminated core (17) and, with the inner surface (23) of the rotor laminated core (17), forms a first cooling channel (25) running parallel to the rotor axis (5).

4. Rotor (1) according to any of the preceding claims,
**characterized in that** an inner surface (23) of the rotor laminated core (17) has cooling fins (27) running parallel to the rotor axis (5).

5. Rotor (1) according to any of the preceding claims,
**characterized by** at least one second cooling channel (29) running parallel to the rotor axis (5) through the rotor laminated core (17).

6. Propeller nacelle with a rotating electric machine which has a rotor (1) according to any of the preceding claims.

## Revendications

1. Rotor (1) d'une machine électrique tournante, comprenant
- un arbre (3) rotorique en deux parties, qui est constitué de deux parties (7, 9) d'arbre rotorique, disposées l'une derrière l'autre suivant un axe (5) du rotor et reliées entre elles,
- un paquet (17) annulaire de tôles rotoriques, qui est disposé autour d'un tronçon d'une première partie (7) de l'arbre rotorique,
- plusieurs entretoises (19) d'arbre, qui relient la première partie (7) d'arbre rotorique au paquet (17) de tôles rotoriques,
- et des tôles (21) de conduit, constituées sous la forme de segment de cylindre creux, qui sont disposées chacune entre deux entretoises (19) d'arbre et qui sont fixées à ces entretoises (19) d'arbre,
comportant un bridage (11) pour relier les deux parties (7, 9) d'arbre rotorique,
dans lequel le bridage (11) comprend une première bride (13) de la première partie (7) d'arbre rotorique et une deuxième bride (15) d'une deuxième partie (9) d'arbre rotorique, **caractérisé en ce que** les entretoises (19) d'arbre sont, à une extrémité axiale, reliées respectivement à la première bride (13) du bridage (11).

2. Rotor (1) suivant la revendication 1,
**caractérisé par** un système de mesure de couple, monté entre les brides (13, 15) du bridage (11) pour détecter un couple produit par le rotor.

3. Rotor (1) suivant l'une des revendications précédentes,
**caractérisé en ce que** chaque tôle (21) de conduit est à distance d'une surface (23) intérieure du paquet (17) de tôles rotoriques et forme avec la surface (23) intérieure du paquet (17) de tôles rotoriques un premier conduit (25) de refroidissement s'étendant parallèlement à l'axe (5) du rotor.

4. Rotor (1) suivant l'une des revendications précédentes,
**caractérisé en ce qu'**une surface (23) intérieure du paquet (17) de tôles rotoriques a des ailettes (27) de refroidissement s'étendant parallèlement à l'axe (5) du rotor.

5. Rotor (1) suivant l'une des revendications précédentes,
**caractérisé par** au moins un deuxième conduit (29) de refroidissement s'étendant parallèlement à l'axe (5) du rotor dans le paquet (17) de tôles rotoriques.

6. Nacelle de propulseur, ayant une machine électrique tournante, qui a un rotor suivant l'une des revendications précédentes.
